(19) Europäisches Patentamt
European Patent Office
Office européen des brevets

(11) **EP 3 012 612 B1**

(12) **EUROPÄISCHE PATENTSCHRIFT**

(45) Veröffentlichungstag und Bekanntmachung des Hinweises auf die Patenterteilung:
**01.01.2020   Patentblatt 2020/01**

(51) Int Cl.:
***G01N 9/00*** (2006.01)

(21) Anmeldenummer: **15189886.3**

(22) Anmeldetag: **15.10.2015**

(54) **VERFAHREN UND VORRICHTUNG ZUR ERMITTLUNG DER DICHTE EINES FLUIDS**

METHOD AND DEVICE FOR DETERMINING THE DENSITY OF A FLUID

PROCEDE ET DISPOSITIF DESTINES A LA DETERMINATION DE LA DENSITE D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2014   AT 7772014**

(43) Veröffentlichungstag der Anmeldung:
**27.04.2016   Patentblatt 2016/17**

(73) Patentinhaber: **Anton Paar GmbH 8054 Graz-Straßgang (AT)**

(72) Erfinder:
- **RECHBERGER, Andreas 8010 Graz (AT)**
- **AMSÜSS, Robert 8053 Graz (AT)**

(74) Vertreter: **Wildhack & Jellinek Patentanwälte Landstraßer Hauptstraße 50 1030 Wien (AT)**

(56) Entgegenhaltungen:
**EP-A2- 0 487 499     AT-B- 280 662
AT-U1- 12 626     DE-B3-102005 044 930**

- **Ptb-Anforderungen: "Herausgegeben von der Physikalisch-Technischen Bundesanstalt (PTB) Dichte-und Gehaltsmessgeräte PTB-A 13.6 Flüssigkeits-Dichtemessgeräte nach dem Schwingerprinzip", , 30. Juni 1994 (1994-06-30), XP055249480, Gefunden im Internet: URL:https://www.ptb.de/cms/fileadmin/inter net/fachabteilungen/abteilung_q/q.3_gesetz liches_messwesen/q.31/ptb-a/PTB-A_13-06.pd f [gefunden am 2016-02-11]**

EP 3 012 612 B1

# EP 3 012 612 B1

**Beschreibung**

Die Erfindung nach Anspruch 1 betrifft ein Verfahren zur Dichtebestimmung aus der Periodendauer eines Biegeschwingers ermittelt aus Periodendauer einer resonaten Schwingungsmode, wobei die Periodendauer aus einem frei gedämpft schwingenden Schwinger bestimmt wird und zwischen einer erzwungenen ungedämpften Schwingung und einer freien Schwingung mit abnehmender Amplitude der Schwingung periodisch gewechselt wird. Die Anordnung zur Durchführung des Verfahrens nach Anspruch 9 umfasst u.a. neben einem Biegeschwinger, auch einen Erregerkreis und Mitteln für die Frequenz- und Amplitudenmessung als auch einen periodisch schaltenden Unterbrecher, der den Erregerkreis für die Messung unterbricht.

Die Messung der Dichte von fluiden Medien mit einem Biegeschwinger beruht auf der Tatsache, dass die Schwingung eines mit einer zu untersuchenden Probe gefüllten Hohlkörpers von der Füllung des Schwingerrohrs abhängt, d.h. von der Masse bzw. wenn das Volumen konstant ist, von der Dichte des eingefüllten Mediums.

Eine Messzelle enthält das schwingfähige Gebilde, nämlich einen hohlen, U-förmig gebogenen, gläsernen oder metallischen Rohrkörper. Dieser wird auf elektronischem Weg zu einer Schwingung angeregt. Die beiden Schenkel des U-förmigen Rohrs bilden die Federelemente des Schwingers. Die Eigenfrequenz des U-förmigen Schwingerrohrs wird nur von jenem Teil der Probe beeinflusst, welcher an der Schwingung tatsächlich teilnimmt. Dieses an der Schwingung teilnehmende Volumen V ist durch die ruhenden Schwingungsknoten an den Einspannstellen des Schwinger-Rohrs begrenzt. Ist das Schwingerrohr mindestens bis zu diesen Einspannstellen mit der Probe gefüllt, nimmt immer dasselbe, genau definierte Volumen V an der Schwingung teil und die Masse der Probe kann daher proportional zu ihrer Dichte angenommen werden. Eine Überfüllung des Schwingers über die Einspannstellen hinaus ist für die Messung belanglos. Aus diesem Grund können mit dem Schwinger auch Dichten von Fluiden gemessen werden, die den Schwinger durchströmen.

Die Dichte des Fuids bestimmt also die spezifischen Frequenzen, in denen das U-förmige Rohr schwingt. Verwendet man Präzisions-Glasrohre oder -Metallrohre, so variieren deren Eigenschaften je nach Dichte und Viskosität der Flüssigkeit. Die ResonanzFrequenzen werden durch geeignete Anregung und Abnahme der Schwingungen ausgewertet und aus der Periodendauer wird die Dichte der eingefüllten fluiden Probe bestimmt. Der Schwinger wird mit Fluiden bekannter Dichte justiert und so werden die Messungen auswertbar.

Für die Periodendauer P und -Dichte p gilt allgemein:

$$\rho = P^2 \frac{R}{4\pi^2 V} - \frac{m}{V} = A\,P^2 - B$$

Derartige Dichteschwinger bzw. Biegeschwinger sind schon seit langem bekannt und werden in unterschiedlichsten Ausführungsformen hinsichtlich Anregung und Abnahme der Schwingung hergestellt. Die unterschiedlichen Mittel zu Anregung und Abnahme der sich ergebenden Eigenschwingungen können z.B. mittels Magnetspulen und Magneten, piezoelektrischen Elementen, kapazitiver Abtastung etc. erfolgen. Dabei sind diese Mittel am Schwinger bevorzugt so anzubringen, dass sie nicht in den Knotenpunkten der untersuchten Eigenschwingung liegen.

Um für diese Messungen Ergebnisse hoher Genauigkeit zu erzielen, muss der Schwinger so ausgeführt sein, dass er möglichst geringe Dämpfung erfährt bzw. über hohe Güte verfügt.

Die hohe Güte des Schwingers resultiert in einer schmalen Bandbreite der Resonanzfrequenzen. Damit ist es nicht praktikabel, die Eigenfrequenzen mit ungerichteter Anregung (z.B. Rauschen) oder einzelnen Impulsen zu erregen.

Die Anregung erfolgt mit periodischen Signalen, beispielsweise Rechteckpulsen oder sinusförmigen Wellen. Dies kann über einen normalen Regelkreis oder über eine phasenverschobene Rückkopplung erfolgen.

In einem Regelkreis wird mit dem Abnahmesignal z.B. auf die maximale Amplitude und damit auf die Eigenschwingung des Biegeschwingers geregelt. Der Schwinger wird so zu einer erzwungenen Schwingung in seiner Resonanzfrequenz angeregt und aus der Bestimmung der Periodendauer dieser Schwingung wird die Dichte des im Schwinger gefüllten Mediums bestimmt.

Über eine Feedback-Schleife wird das Ausgangssignal des Abnahmemittels der Schwingung um 90 Grad am mechanischen System phasenverschoben, verstärkt und dieses periodische Signal für die Anregung des Schwingers verwendet. Damit schwingt der Biegeschwinger in einer erzwungenen Schwingung.

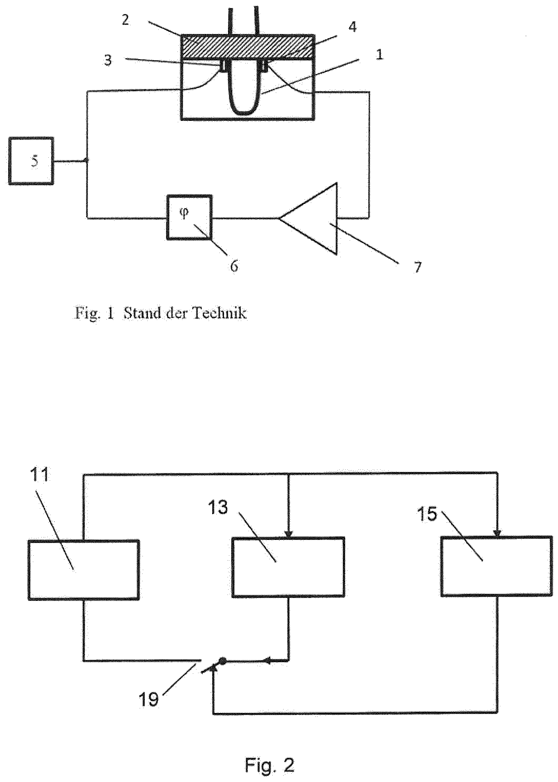

Abb. 1 zeigt ein Prinzipschaltbild eines derartigen Erregerverstärkers:
Der Biegeschwinger 1 ist in einem Haltemittel 2 eingespannt. Die Erregung erfolgt hier beispielsweise mittels Piezoelement 3 in der Nähe der Einspannstelle des ersten Schenkels des Schwingers, die Abnahme erfolgt mit einem zweiten Piezoelement 4 am zweiten Schenkel des Schwingers. Ein Phasendreher 6 und ein Verstärker 7 in Kombination bilden den einfachen Erregerverstärker. Das Ausgangssignal des Abnahmemittels wird verstärkt und um 90 ° phasengedreht und dem Mittel zur Schwingungserregung zugeführt. Mit einem derartigen Erregerverstärker kann der Schwinger in einen Zustand der Resonanzschwingung "hochgeschwungen" werden. Die Periodendauer bzw. Frequenz der Schwingung wird mit dem Frequenzmesser 5 gemessen und einer Auswerteeinheit zur Dichtebestimmung zugeführt.

Bekannte Biegeschwinger werden nach diesem Prinzip mit analogen und digitalen Erregerverstärkern betrieben und aus der Frequenz bzw. Periodendauer des Schwingers wird in bekannter Weise die Dichte des zu untersuchenden fluiden Mediums ermittelt.

Die tatsächliche Dichte fluider Medien ist stark von der Temperatur abhängig. Diese wird im Regelfall zumindest gemessen und/oder der gesamte Schwinger bzw. die Probe wird auf eine bestimmte Messtemperatur mit geeigneten Mitteln (z.B. Peltierelementen) temperiert.

Bestimmt man die Dichte mit dem Biegeschwinger, so hat durch das unterschiedliche Verhalten von Proben gleicher Dichte unterschiedlicher Viskosität im Schwinger auch die Viskosität der Probe einen relativ großen Einfluss auf das Messergebnis und muss Berücksichtigung finden. Die Viskosität äußert sich neben ihrem Einfluss auf die ermittelte Dichte vor allem auch durch ihren Einfluss auf die Dämpfung bzw. Güte des Schwingers.

Unterschiedlichste Verfahren zur Korrektur des viskositätsabhängigen Dichtewertes sind bekannt, die einen für diese Dämpfung repräsentativen Parameter auswerten und die Dichtemessung korrigieren. Dies erfolgt zumeist basierend auf zusätzlich angeregten Schwingungen im Bereich von sogenannten Oberwellen durch Betrachtung der Phasenbeziehung zur Anregung. Alternativ bekannt ist beispielsweise die Verwendung eines überlagerten Regelkreises, der die Amplitude des Anregungssignals variiert, um eine konstante Schwingungsamplitude zu erhalten. Die über das Anregesignal eingebrachte Energie entspricht somit der Dämpfung des Systems und kann zur Gütebestimmung herangezogen werden.

Die Gütemessung kann hier aber auch durch Messung der abklingenden Amplitude bei periodischem Abkoppeln des Erregers erfolgen, diese ist theoretisch die optimale Lösung zur Ermittlung der Güte. Dadurch werden jegliche Ungenauigkeiten der Anregung (z.B. Nicht-Linearitäten und/oder Phasenverzerrungen von Filtern, etc.) vermieden.

Bei den hohen verwendeten Güten der Schwinger besitzen diese allerdings den Nachteil von langen Messzeiten, stellen immer nur eine Einzelmessung dar und beeinflussen auch die Periodendauer der erzwungenen Schwingung. Bevorzugt werden daher keine Unterbrechungen des Schwingers nach dem Einschwingen durchgeführt.

In all diesen bekannten Anordnungen wird die Periodendauer der erzwungenen Grundschwingung im Regelfall für die Auswertung zur Dichtemessung verwendet.

Die Nachteile derartiger Anordnungen sind beispielsweise bei der Amplitudenmodulation, dass die Resonanzfrequenz nicht exakt gemessen wird, da auch nicht lineare Verzerrungen (Elektronik, IIR Filter) wie auch zeitliche Verzögerungen (Zeitquantisierung) des ADC (Analog-Digital-Konverter) und/oder DAC (Digital-Analog-Konverter)- Signals eine Rolle spielen.

Zusätzlich verlangen die hohen Güten und somit die daraus resultierende geringe Bandbreite des Schwingers sehr kleine Modulationsfrequenzen in der Größenordnung von 1/1000 ... 1/2000 der Eigenfrequenz.

Beispielsweise werden für Resonanzfrequenzen im Bereich von 300 Hz (Glasschwinger) bis 5000 Hz (Metall), und Gütewerten von 10... 5'000 (Glas) und 10 .. 14'000 (Metall) die Modulationsfrequenz im Bereich von 1/3 ... 1/10 Hz verwendet. Damit ergeben sich für den Periodendurchlauf 3...10 sec.

Je geringer die Modulationsfrequenz ist, desto länger dauert die Abklingmessung der Güte, da im allgemeinen ein neuer Messwert einmal pro Periode der Modulationsfrequenz verfügbar ist. Also je nach Medium alle 3 bis 10 sec. Zusätzlich ist je nach erforderlicher Genauigkeit eine zusätzliche Mittelung nötig.

Erfindungsgemäß wird nunmehr vorgeschlagen, die Vorteile der Bestimmung der Periodendauer mittels erzwungener Schwingung (kontinuierliches Messverfahren, parallele Phasenregelung) und die Vorteile der von der Anregung unabhängigen Messung des Abklingverhaltens für die Messung der Güte zu kombinieren und sowohl die Güte als auch die Periodendauer des Schwingers direkt mit einer kontinuierlichen Abklingmessung zu untersuchen und hinsichtlich der viskositätskorrigierten Dichte auszuwerten.

Durch die periodische Messung des Abklingverhaltens besteht hier der Nachteil einer nur einmaligen Messung nicht mehr. Da die gesamte Bestimmung der Dichte und Viskositätskorrektur aus dem Abklingverhalten erfolgt, ist auch die Beeinflussung der Perioden- bzw. Phasenmessung aus dem erneuten Hochschwingen des Erregerverstärkerkreises kein Problem mehr.

Auch können hier bei geringeren Güten des Schwingers höhere Genauigkeiten erzielt werden.

Fig 2. zeigt ein Prinzipschaltbild der Erfindung: Die Erregung bzw. Erregereinheit 13 versetzt den Schwinger 11 in Resonanz. Dies kann über einen normalen Regelkreis oder über eine phasenverschobene Rückkopplung erfolgen. (z.B. -90° Resonanzbedingung des Schwingers). Dies erlaubt die Realisierung eines quasi "reglerlosen" Erregers, da die -90° Phasendrehung eine reine Signaltransformation darstellt - im Gegensatz zu einem geregeltem Oszillator der basierend auf einen Phasenvergleich (Output/Input) auf den - 90° Punkt hinregelt. Die Periodendauer bzw. Frequenz der Schwingung wird mit dem Frequenzmesser 15 gemessen und einer Auswerteeinheit zur Dichtebestimmung zugeführt.

Erfindungsgemäß wird nun vorgeschlagen, dass sowohl die Periodendauer als auch die Amplitude der erzwungenen resonanten Schwingung erst nach dem Entkoppeln des Erregers bestimmt werden, d.h.. es wird erst die abklingende Schwingung des Biegeschwingers untersucht. Die Erregung hat somit keinen Einfluss auf die Messung an sich - und benötigt auch keine Information über den aktuellen Messzyklus. Der Schalter bzw. Unterbrecher 19 unterbricht dafür periodisch die Erregung des Schwingers. Der Erregerkreis wird für eine Zeitdauer t1 über diesen Schalter 19 unterbrochen und das Abklingverhalten des Schwingers 11 untersucht. Danach wird der Schalter wieder geschlossen und der Erregerkreis 13 zwingt den in seiner gedämpften freien Resonanz schwingenden Schwinger 11 wieder in eine erzwungene ungedämpfte Schwingung. Bevorzugt wird der Erregerkreis so lange geschlossen, bis die erzwungene Resonanzschwingung des Schwingers in maximaler Amplitude schwingt bzw. die maximale Amplitude erreicht hat.

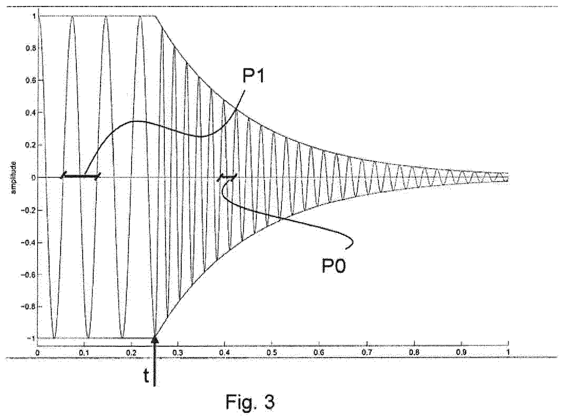

Fig. 3 zeigt ein derartiges Abklingen des Schwingers. Nach dem Entkoppeln des Erregerkreises zum Zeitpunkt t wird die Amplitude der Schwingung mit der Zeit je nach Güte des Schwingers schneller oder langsamer abklingen. Die tatsächliche Resonanzfrequenz bzw. Periodendauer P0 wird hier von der der erzwungenen Schwingung (Periodendauer P1) leicht abweichen, da hier die Nichtlinearitäten und Zeitfehler des Erregerkreises entfallen und der freie Schwinger in seiner Resonanzfrequenz schwingt. Dabei zeigt das Bild zur Verdeutlichung eine stark überzeichnete Differenz der Periodendauern.

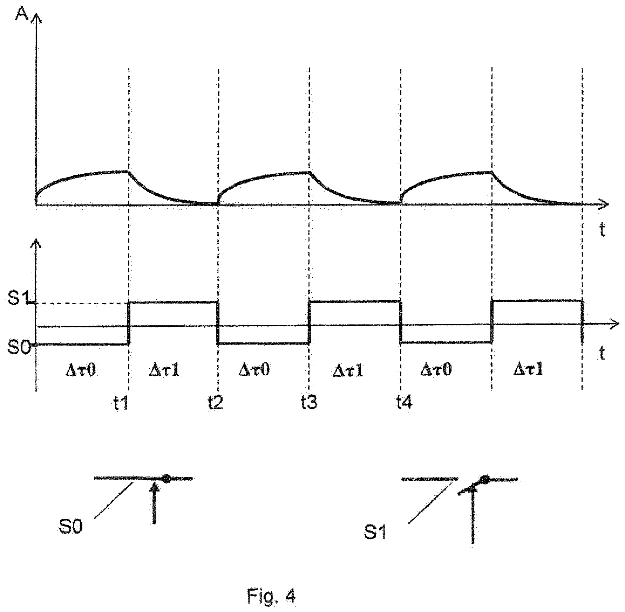

Fig. 4 zeigt das Bild des periodischen Ein- und Ausschalten des Erregers (Schalter in Position S0 - Schwinger schwingt in die Resonanz hoch) mit den korrespondierenden Signalen für die Amplitude A in Abhängigkeit der Zeit.

Die Amplitude nimmt mit dem Einschwingvorgang zu. Der Amplitudenverlauf beim Anregen folgt dabei einer Funktion vom typ $1 - e^{-\frac{t}{\tau}}$.

Zum Zeitpunkt t1 wird der Schalter geöffnet (Schalter in Position S1), der Schwinger schwingt hier gedämpft, die Amplitude zeigt das Abklingverhalten und in diesem Zeitraum wird die Schwingung hinsichtlich Frequenz und Amplitude ausgewertet. Zum Zeitpunkt t2 wird der Schalter wieder geschlossen, der Schwinger schwingt wieder hoch und die erzwungene Schwingung wird wieder angeregt. Dieser Vorgang wird periodisch wiederholt (t3, t4, ...)

Die Steuerung dieser Periode kann z.B. jeweils über das Amplitudensignal der Schwingung erfolgen, sowohl im Anschwingen als auch im Abklingen kann das Erreichen eines bestimmten Amplitudenwertes herangezogen werden und daraus die Periode zum Schalten von Schalter 19 herangezogen werden. Alternativ kann auch direkt ein nicht streng periodisches An- und Abschalten der Erregerverstärkung vorgenommen werden. Die Amplitude muss sich nicht bis 0 absinken (vollständiges Ausklingen) sondern es kann bereits früher wieder eingekoppelt werden.

Dadurch ist es möglich die Periode bzw. Frequenz des Schwingers während des Abklingvorganges zu messen, und gleichzeitig alle implementierungsabhängigen Abweichungen der Erregung zu eliminieren, da diese während der Abklingmessung nicht auf den Schwinger beaufschlagt werden.

Des Weiteren kann die Messung der Frequenz des Schwingers mit einer Frequenzvergleichsmessung durchgeführt werden, welche sehr genau ist. (Phasendrift der Schwebung).

Da die Erregung messinvariant ist, kann sehr schnell zwischen Abkling- und Erregungsmodus gewechselt werden (mehrmals pro Sekunde).

Bei einer vorteilhaften Ausführungsform der Erfindung kann vorgesehen sein, dass der Abklingvorgang nach einem vorgegebenen Zeitintervall oder bei Erreichen eines vorgegebenen Amplitudenwertes unterbrochen und durch Extrapolation der erhaltenen Amplitudenwerte die Güte berechnet wird und/oder die Breite des Abklingfensters bzw. das für das Abklingen gewählte Zeitintervall konstant gehalten bzw. gewählt wird.

Der Abklingvorgang muss somit nicht vollständig erfolgen, da durch Extrapolation der Amplitudenwerte auch mit einem kleinen Amplitudenabfall die Güte berechnet werden kann. Somit kann das Abklingfenster eine konstante von der Befüllung des Schwingers unabhängige Breite haben. Die Genauigkeit der Gütemessung steigt somit mit fallender Güte, da der Amplitudenunterschied innerhalb des konstanten Abklingfensters größer wird -und somit die Differenz bezogen auf ein konstantes Rauschen.

Bevorzugt wird das Intervall für das An- und Abschalten für den jeweiligen Schwinger festgelegt. In Abhängigkeit von Güte und Amplitude der untersuchten Resonanzschwingung kann die Dauer $\Delta\tau0{:}\Delta\tau1$ der Zeitintervalle für die Erregung durch das Abklingen im Verhältnis 1:1 bis 1:3 liegen. Dies wird auch durch die zur Verfügung stehende "Anrege-Energie", d.h. Spannung am Piezokristall, Strom durch die Spule, beeinflusst, da durch höhere eingebrachte Energie kürzere Anschwingzeiten realisierbar sind).

Bevorzugt ist dabei vorgesehen, dass der Unterbrecher bzw. Schalter 19, der die Erregerverstärkung unterbricht, erst am Ausgang des Erregerverstärkerkreises angebracht wird. Damit kann der Schwingkreis der Erregerverstärkung auch im Unterbrechungsfall mit der Periode des Biegeschwingers in Phase gehalten werden und im Falle des Wiedereinschaltens der Erregerverstärkung kann durch die phasenrichtige Erregung rascher wieder die ursprüngliche Amplitude erreicht werden. Dabei kann sich der Erregerverstärker vor oder nach dem DAC befinden.

Die abklingende Schwingung bzw. deren abklingender Sinus wird nach Frequenz und Amplitude analysiert und aus diesen beiden Werten wird in einer Auswerte- und Anzeigeeinheit die Dichte des im Schwinger befindlichen Mediums ermittelt. Durch weitere Verarbeitung der Signale können beispielsweise Viskositätskorrekturen und Füllfehlererkennungen durchgeführt werden. Die dafür benötigen Justierkurven und Justierkonstanten werden nach Justiermessungen an Standards bekannter Dichte und Viskosität in der Steuer- und Auswerteeinheit hinterlegt.

Die Messung der Abklingkurven kann dabei über beliebig lange Perioden erfolgen, beispielsweise erfolgt die Messung bei einem Metallschwinger mit 4..5 kHz Resonanzfrequenz (entsprechend einer Periodendauer von ca 200...250 $\mu$s) bei luftgefülltem Schwinger mit einer Abklingzeitdauer $\Delta\tau1$ von ca. 65 msec.

Generell sind Abklingperioden von kleiner 1 sec bevorzugt, um die Messungen ausreichend rasch durchführen zu können. Bei hohen Güten entstehen lange Messzeiten, da sich durch die geringe Dämpfung die Amplitude des Schwingers nur langsam ändert. Die Wahl der Dauer der Abklingmessung erfolgt auch in Abhängigkeit von Genauigkeit, Elektronikkomponenten und Rechnerleistung.

Die Bestimmung von Frequenz und Amplitude kann beispielsweise mittels einer Fourier-Analyse geschehen, die Frequenzbestimmung auch beispielsweise direkt durch Mischen eines lokalen Oszillators mit dem Messsignal oder Bestimmung der Nulldurchgänge des Messsignals. Die Amplitude kann beispielsweise direkt frequenzunabhängig und instantan gemessen werden, mittels gleitender Maxima etc. Bei direkter Messung der Amplitude kann jedem einzelnen ADC Sample, also jedem einzelnen Messwert vom ADC, ein eigener Amplitudenwert zugeordnet werden.

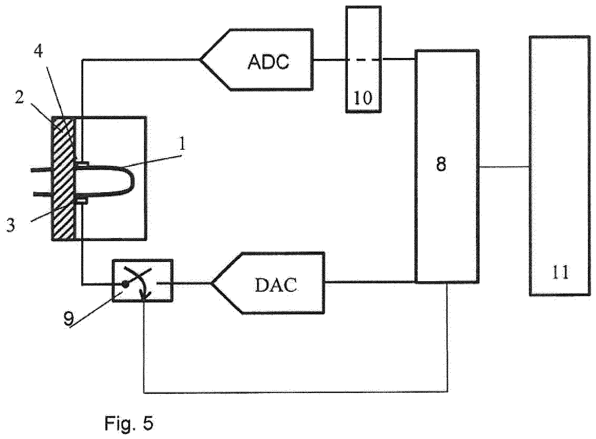

Fig. 5 zeigt eine Ausführungsform des Schaltungsaufbaus eines erfindungsgemäßen Biegeschwingers: Im Anfangszustand ist Schalter 9 geschlossen. Der Biegeschwinger ist hier vorteilhafterweise mit einer Einheit zur Anregung und einer Einheit zur Abnahme in Form von zwei Piezoelementen für Anregung 3 und Abnahme 4 ausgestattet. Anregung und Abnahme erfolgen über analoge Spannungssignale. Das Signal der Abnahmeeinheit 4 wird durch einen Analog-Digital- Converter (ADC) digitalisiert und in einen programmierbaren digitalen Baustein 8 geleitet, der hier die zentralen Steuer - und Regelaufgaben übernimmt.

Dieser zentrale Baustein 8 einer digitalen Ausführung muss eine möglichst rasche Signalverarbeitung gewährleisten, dies kann z.B. mittels $\mu$-Controller oder DSP (Digitale Signal Prozessor) umgesetzt werden. Aufgrund der erzielbaren Regelgeschwindigkeit wird bevorzugt ein FPGA (Field Programmable Gate Array) verwendet.

Die prinzipiell in Fig.1 beschriebene Erregerverstärkerschaltung wird mit diesem Bauteil und einem weiteren Digital-Analog-Prozessor, dessen Steuersignal die Erregereinheit 3 antreibt, umgesetzt. Das verstärkte Ausgangssignal ist zum Eingangssignal um 90° phasenverschoben und erregt den Schwinger zu einer erzwungenen Schwingung.

Alternativ können anstelle der Piezoelemente beliebige elektrische Komponenten zur Anregung und Abnahme der Schwingung beispielsweise auch eine Kombination von stromdurchflossenen Spulen und Permanentmagneten verwendet werden. Anregung und Abnahme kann auch an anderen Stellen des Schwingers, z.B. seitlich an den Schenkeln, erfolgen. Dabei werden als Ausgangs- und Steuersignal die Spulenströme der Spulen verwendet.

Zentraler Bestandteil der Anordnung ist nunmehr ein elektronischer Schalter 9, der ebenfalls vom zentralen Baustein 8 gesteuert, d.h. periodisch geöffnet und geschlossen wird.

Die Frequenz- bzw. Periodendauerbestimmung der Schwingung des Biegeschwingers erfolgt durch Vergleich mit dem Signal eines lokalen Oszillators bzw. direkt durch Mischen eines lokalen Oszillators mit dem Messsignal bzw. Vergleich des Schwingungssignals eines lokalen Oszillators mit dem Messsignal.

Es erfolgt dazu ein Frequenzvergleich des Eingangssignals $\omega1$, das ist das Abnahmesignal vom Piezoelement 4, das die Periodendauer des Biegeschwingers liefert, mit dem Signal eines lokalen Oszillators $\omega2$.

Multipliziert man die beiden Signale miteinander so gilt:

$$\cos\omega1*\cos\omega2 \sim \cos(\omega1-\omega2) + \cos(\omega1 + \omega2)$$

Der lokale Oszillator wird so geregelt, dass die beiden Frequenzen gleich groß sind und damit der erste Term zu einer reinen Amplitude (DC-Signal) wird, der zweite Term kann durch den großen Unterschied der Signale einfach gefiltert werden. Die Oberwelle für einen 4 kHz Schwinger würde hier mit $\omega1 = \omega2$ bei 8 kHz liegen.

Um die Genauigkeit zu steigern und/oder die Viskositätskorrektur mit zwei unterschiedlichen resonanten Schwingungen zu ermitteln, wird den Schwinger nicht nur in einer resonanten Mode anzuregen, sondern gleichzeitig eine zweite resonante Mode, z.B. die erste Oberwelle, mit dem Erregerverstärker anzuregen. Dies kann im Falle eines digitalen Erregerverstärkers zeitgleich durch Überlagerung der jeweiligen Anregungssignale erfolgen.

Zur Auswertung dieser beiden Schwingungen wird ein zusätzlicher Filter 10 vorgesehen, der das Antwortsignal des Biegeschwingers wieder in die beiden Frequenzen trennt.

Die frequenzunabhängige und instantane Amplitudenmessung ordnet jedem einzelnen ADC-Sample einen eigenen Amplitudenwert zu, sodass nicht über eine ganze Schwingungsperiode gemessen werden muss.

Dies wird dadurch erreicht, dass der lokale Oszillator anstelle der üblichen reellen Sinus-Darstellung ($y=\sin(\omega t)$) als komplexer Rotor realisiert wird:

$$y = \exp(j\omega t) = \cos(\omega t)+ j\sin(\omega t).$$

Die Signalamplitude wird mittels Transformation der kartesischen Darstellung des ADC-Signals in Polarkoordinaten ermittelt:

$$y = A^*e^{(jP)}$$

Weiters ist eine amplitudenunabhängige Bestimmung der aktuellen Phase möglich:
Da zu jedem einzelnen Eingangssample ein entsprechender komplexer Datenpunkt zugeordnet werden kann, ist auch eine instantane Bestimmung der Phasenlage des Schwingers möglich. Mittels einfacher Differentiation der Phase kann somit die Periode bzw. Frequenz berechnet werden. Diese Messung ist dadurch unabhängig von der Amplitudenmessung bzw. der aktuellen Schwingerfrequenz.

Erfindungsgemäß ist ferner ein erfindungsgemäßes Verfahren zur Messung der Dichte aus der Periodendauer einer resonanten Schwingungsmode eines Biegeschwingers vorgesehen, wobei der Schwinger mit einer Erregerverstärker-Schaltung in resonante ungedämpfte Schwingung versetzt wird, welches Verfahren dadurch gekennzeichnet ist, dass der Schwinger während eines Zeitintervalls $\Delta t_1$ durch einen Erregerverstärker in erzwungene ungedämpfte Schwingung versetzt wird,die Anregung der erzwungenen Schwingung periodisch unterbrochen wird, wobei der Schwinger danach während eines Zeitintervalls $\Delta t_2$ frei und gemäß seiner Güte gedämpft schwingt, wobei die Periode der freien gedämpften Schwingung für die Dichtebestimmung herangezogen wird, und nach der Messung der Schwinger wieder zu ungedämpften Schwingung angeregt wird. Ausgestaltet wird dieses Verfahren mit den Merkmalen der Ansprüche 2 bis 8.

Ferner kann ein Steuer- und/oder Regelkreis für ein Verfahren zur Dichtemessung obiger Art dadurch gekennzeichnet sein, dass im Erregerschaltkreis, der den Schwinger zur ungedämpften Schwingung anregt, ein Unterbrecher vorgesehen ist, der wiederholbar in definierten Zeitintervallen zwischen dem Erregerkreis zur ungedämpften Schwingung des Biegeschwingers und ohne Vorgabe einer Erregung gedämpft schwingendem Biegeschwinger umschaltet und die Periode der Schwingung zur Ermittlung der Dichte bei offenem Erregerkreis gemessen wird. Ausgestaltet wird dieser Steuer- bzw. Regelkreis mit den Merkmalen der Ansprüche 9 bis 13.

Bevorzugt ist der Unterbrecher bzw. Schalter 19, der die Erregerverstärkung unterbricht, am Ausgang des Erregerverstärkerkreises angebracht. Damit kann der Schwingkreis der Erregerverstärkung auch im Unterbrechungsfall mit der Periode des Biegeschwingers 1 in Phase gehalten werden und im Falle des Wiedereinschaltens kann der Erregerverstärker durch die phasenrichtige Erregung rascher wieder die ursprüngliche Amplitude erreicht werden. Dabei kann sich der Erregerverstärker vor oder nach dem DAC befinden.

Von Vorteil ist es ferner, wenn der Unterbrecher nach dem Erregerverstärker in der Erregerverstärkerschaltung eingebaut ist und das verstärkte Ausgangssignal für die Verstärkerschaltung mit dem Biegeschwinger in Phase bleibt. Damit wird sichergestellt, dass die Erregerverstärkerschaltung mit dem Schwinger in Phase bleibt. Wenn der Schalter wieder geschlossen wird, muss sich die Frequenz der erzwungenen Schwingung nicht wieder neu einstellen, sondern wird gleich mit der richtigen Phasenbeziehung "erzwungen".

**Patentansprüche**

1. Verfahren zur Messung der Dichte von Fluiden aus der Periodendauer einer resonanten Schwingungsmode eines Biegeschwingers mit U-förmigem Schwingerrohr, wobei der Schwinger mit einer Erregerverstärker-Schaltung in resonante ungedämpfte Schwingung versetzt wird,

   - wobei der Schwinger während eines Zeitintervalls $\Delta t_1$ durch einen Erregerverstärker in erzwungene ungedämpfte Schwingung versetzt wird,
   - wobei die Anregung der erzwungenen Schwingung periodisch für ein Zeitintervall $\Delta t_2$ unterbrochen wird,
   - wobei der Schwinger während des Zeitintervalls $\Delta t_2$ der Unterbrechung frei und gemäß seiner Güte gedämpft schwingen gelassen wird,
   - wobei in diesem Zeitintervall $\Delta t_2$ die Periode dieser freien, gedämpften Schwingung für die Dichtebestimmung herangezogen wird, und
   - wobei nach der Messung der Periode der freien, gedämpften Schwingung der Schwinger wieder zur resonanten, ungedämpften Schwingung angeregt wird, wobei zumindest zwei resonante Schwingungsmoden des Schwingers durch Überlagerung zeitgleich durch den Erregerverstärker angeregt und frei schwingend ausgewertet werden.

2. Verfahren nach Anspruch 1, **dadurch gekennzeichnet, dass** die freie, gedämpfte Schwingung auch hinsichtlich ihrer Phase und/oder Amplitude ausgewertet wird, und mit diesen Parametern eine Viskositätskorrektur des ermittelten Dichtewerts vorgenommen wird.

3. Verfahren nach einem der vorgehenden Ansprüche, **dadurch gekennzeichnet, dass** die Bestimmung der Periodendauer der Schwingung durch Frequenzvergleich mit einem lokalen Oszillator erfolgt.

4. Verfahren nach Anspruch 2, **dadurch gekennzeichnet, dass** die Amplitudenbestimmung direkt mittels Koordinatentransformation des Messsignals erfolgt.

5. Verfahren nach einem der vorgehenden Ansprüche, **dadurch gekennzeichnet, dass** das periodische An- und Abschalten des Erregerkreises für vorgegebenen, fixen, vorzugsweise gleich langen, Zeitintervallen erfolgt und/oder dass das An- und Abschalten des Erregerkreises mittels der Amplitudenwerte der gedämpften und/oder ungedämpften Schwingung geregelt wird.

6. Verfahren nach Anspruch 5, **dadurch gekennzeichnet, dass** das Zeitintervall $\Delta t_1$ der Erregerverstärkung in fixem Verhältnis zum Zeitintervall $\Delta t_2$ der Periodenmessung steht,
wobei das Verhältnis $\Delta t_1 : \Delta t_2$ bevorzugt im Bereich zwischen 1:1 bis 1:3 liegt.

7. Verfahren nach einem der Ansprüche 1 bis 6, **dadurch gekennzeichnet,**

   - **dass** der Erregerkreis so lange geschlossen bleibt, bis die erzwungene Resonanzschwingung des Schwingers ihre maximaler Amplitude erreicht, und/oder
   - **dass** sowohl die Periodendauer als auch die Amplitude der erzwungenen resonanten Schwingung erst nach dem Entkoppeln des Erregers bestimmt werden.

8. Verfahren nach einem der Ansprüche 1 bis 7, **dadurch gekennzeichnet,**
**dass** der Abklingvorgang nach einem vorgegebenen Zeitintervall oder bei Erreichen eines vorgegebenen Amplitudenwertes unterbrochen und durch Extrapolation der erhaltenen Amplitudenwerte die Güte berechnet wird und/oder die Breite des Abklingfensters bzw. das für das Abklingen gewählte Zeitintervall konstant gehalten bzw. gewählt wird.

9. Steuer- und/oder Regelkreis, insbesondere zur Durchführung eines Verfahrens zur Dichtemessung nach einem der Ansprüche 1 bis 8, mit

   - einem Erregerschaltkreis, der im Betrieb einem ein U-förmiges Schwingrohr aufweisenden Biegeschwinger zugeschaltet wird, wobei im Erregerschaltkreis, der den Schwinger zur ungedämpften Schwingung anregt, ein Unterbrecher oder Schalter (9, 19) vorgesehen ist, der die Erregung des Biegeschwingers (1) zur ungedämpften Schwingung wiederholt bzw. für periodisch definierte Zeitintervalle ($\Delta t_2$) unterbricht, in welchen Zeitintervallen ($\Delta t_2$) der Biegeschwinger (1) ohne Vorgabe einer Erregung gedämpft frei schwingt, und der Unterbrecher bzw. Schalter (19), der die Erregerverstärkung unterbricht, am Ausgang des Erregerverstärkerkreises angebracht ist, wobei der Schwingkreis für die Verstärkerschaltung und der Biegeschwinger (1) im Unterbrechungsfall in Phase schwingen,
   - einer Mess- und Auswerteeinheit, welche die Periode der gedämpften freien Schwingung zur Ermittlung der Dichte des zu untersuchenden Fluids misst und zur Bestimmung der Dichte des Fluids heranzieht, wobei die Mess- und Auswerteinheit einen zusätzlichen Filter (10) umfasst, der zur Trennung in die jeweiligen überlagerten Frequenzen des Antwortsignals ausgebildet ist.

10. Steuer- und Regelkreis für einen Biegeschwinger nach Anspruch 9, **dadurch gekennzeichnet, dass** zur Umschaltung in die erzwungene Schwingung im Erregerkreis jeweils ein Regelkreis (8) vorgesehen ist, der bei Erreichen eines bestimmten Amplitudenwertes für die gedämpfte freie Schwingung die Umschaltung vornimmt.

11. Steuer- und/oder Regelkreis für einen Biegeschwinger nach Anspruch 9 oder 10, **dadurch gekennzeichnet, dass** die Steuerung für die Umschaltung bzw. die Mess- und Auswerteeinheit festgelegte Zeitintervalle $\Delta t_1$ und/oder $\Delta t_2$ vorgibt.

12. Steuer- und/oder Regelkreis nach einem der vorgehenden Ansprüche, **dadurch gekennzeichnet, dass** der Unterbrecher (9, 19) zwischen dem Erregerverstärker und dem Biegeschwinger (1) bzw. dessen Erreger eingeschaltet ist.

13. Steuer- und/oder Regelkreis nach einem der Ansprüche 9 bis 12, **dadurch gekennzeichnet, dass** sowohl die Periodendauer als auch die Amplitude der erzwungenen resonanten Schwingung erst nach dem Entkoppeln des Erregers bestimmt werden.

14. Biegeschwinger mit einem U-förmigen Schwingerrohr und mit einem Steuer- und/oder Regelkreis nach einem der Ansprüche 9 bis 13.

15. Messgerät mit einem Biegeschwinger mit einem U-förmigen Schwingerrohr und mit einem Steuer- und/oder Regelkreis nach einem der Ansprüche 9 bis 14.

**Claims**

1. Method for determining the density of fluids from the period duration of a resonant oscillation mode of a flexural resonator with U-shaped oscillating tube, wherein the resonator is set into resonant undamped oscillation with an excitation amplified circuit,

   - wherein the resonator during a time interval $\Delta t_1$ is set by means of an excitation amplifier into forced undamped oscillation,
   - wherein the excitation of the forced oscillation is periodically interrupted for a time interval $\Delta t_2$,
   - wherein the resonator during the time interval $\Delta t_2$ of the interruption is allowed to oscillate in a damped manner freely and in accordance with its quality,
   - wherein in this time interval $\Delta t_2$ the period of this free, damped oscillation is used for determining the density, and
   - wherein after the measurement of the periods of the free, damped oscillation the resonator is again excited to resonant, undamped oscillation,

   wherein at least two resonant oscillation modes of the resonator are evaluated by means of superimposing, simultaneously excited by the excitation amplifier and oscillating freely.

2. Method according to claim 1, **characterised in that** the free, damped oscillation is evaluated also with respect to its phase and/or amplitude, and with these parameters a viscosity correction of the determined density value is undertaken.

3. Method according to any of the preceding claims, **characterised in that** the determination of the period duration of the oscillation is carried out by means of frequency comparison with a local resonator.

4. Method according to claim 2, **characterised in that** the amplitude determination is carried out directly by means of coordinate transformation of the measuring signal.

5. Method according to any of the preceding claims, **characterised in that** the periodic switching-on and switching-off of the excitation circuit is carried out for predetermined, fixed, preferably equally long time intervals and/or that the switching-on and switching-off of the excitation circuit is regulated by means of the amplitude values of the damped and/or undamped oscillation.

6. Method according to claim 5, **characterised in that** the time interval $\Delta t_1$ of the excitation amplification is in a fixed relationship to the time interval $\Delta t_2$ of the period measurement wherein the ratio $\Delta t_1 : \Delta t_2$ is preferably in the range between 1:1 to 1:3.

7. Method according to any of claims 1 to 6, **characterised in**

   - **that** the excitation circuit remains closed until the forced resonance oscillation of the resonator reaches its maximum amplitude, and/or
   - **that** both the period duration and the amplitude of the forced resonant oscillation are determined only after the uncoupling of the exciter.

8. Method according to any of claims 1 to 7, **characterised in** **that** the decaying procedure is interrupted after a predetermined time interval or when a predetermined amplitude value is reached and by extrapolation of the obtained amplitude values the quality is calculated and/or the breadth of the decay window or the time interval selected for the decaying is kept or selected as constant.

9. Controlling and/or regulating circuit, in particular for carrying out a method for measuring density according to any of claims 1 to 8, having

- an excitation circuit, which during operation is connected with a flexural resonator having a U-shaped oscillating tube, wherein
in the excitation circuit, which excites the resonator to undamped oscillating, an interrupter or switch (9, 19) is provided which repeats, or for periodically defined time intervals ($\Delta t_2$) interrupts, the excitation of the flexural resonator (1), at which time intervals ($\Delta t_2$) the flexural resonator (1) swings freely in a damped manner without the addition of an excitation,
and
the interrupter or switch (19), which interrupts the excitation amplification, is installed at the output of the excitation amplification circuit, wherein
the oscillation circuit for the amplification circuit and the flexural resonator (1), in the case of interruption, oscillate in phase,
- a measuring and evaluating unit which measures the periods of the damped free oscillation for determining the density of the fluid to be examined and uses them to determine the density of the fluid, wherein
the measuring and evaluating unit includes an additional filter (10) which is configured for separating into the respective superimposed frequencies of the response signal.

10. Controlling and regulating circuit for a flexural resonator according to claim 9, **characterised in that** for the switching into the forced oscillation in the excitation circuit in each case one regulation circuit (8) is provided which, when a specific amplitude value for the damped free oscillation is reached, undertakes the switching.

11. Controlling and/or regulating circuit for a flexural resonator according to claim 9 or 10, **characterised in that** the control means prescribes fixed time intervals $\Delta t_1$ and/or $\Delta t_2$ for the switching or the measuring and evaluating unit.

12. Controlling and/or regulating circuit according to any of the preceding claims, **characterised in that** the interrupter (9, 19) is wired between the excitation amplifier and the flexural resonator (1) or its exciter.

13. Controlling and/or regulating circuit according to any of claims 9 to 12, **characterised in that** both the period duration and the amplitude of the forced resonant oscillation are determined only after the decoupling of the exciter.

14. Flexural resonator having a U-shaped oscillating tube and having a controlling and/or regulating circuit according to any of claims 9 to 13.

15. Measuring device having a flexural resonator having a U-shaped oscillating tube and having a controlling and/or regulating circuit according to any of claims 9 to 14.

**Revendications**

1. Procédé servant à mesurer la densité de fluides à partir de la durée de période d'un mode d'oscillation résonant d'un résonateur de flexion avec un tube oscillateur en forme de U, dans lequel l'oscillateur est amené en vibration résonante non amortie avec un circuit amplificateur d'excitation,

- dans lequel l'oscillateur est amené pendant un laps de temps $\Delta t_1$ par un amplificateur d'excitation en une oscillation non amortie forcée,
- dans lequel l'excitation de l'oscillation forcée est interrompue de manière périodique pour un laps de temps $\Delta t_2$,
- dans lequel l'oscillateur peut osciller librement et de manière amortie selon sa qualité pendant le laps de temps $\Delta t_2$ de l'interruption,
- dans lequel lors dudit laps de temps $\Delta t_2$, la période de ladite oscillation libre amortie est prise en compte pour la définition de densité, et
- dans lequel après la mesure de la période de l'oscillation libre amortie, l'oscillateur est excité à nouveau aux fins de l'oscillation résonante non amortie,

dans lequel au moins deux modes d'oscillation résonants de l'oscillateur sont excités par superposition dans le même temps par l'amplificateur d'excitation et sont évalués en oscillation libre.

2. Procédé selon la revendication 1, **caractérisé en ce que** l'oscillation libre amortie est évaluée également eu égard à sa phase et/ou son amplitude et une correction de viscosité de la valeur de densité déterminée est réalisée avec lesdits paramètres.

3. Procédé selon l'une quelconque des revendications précédentes, **caractérisé en ce que** la définition de la durée de période de l'oscillation est effectuée par comparaison de fréquences avec un oscillateur local.

4. Procédé selon la revendication 2, **caractérisé en ce que** la définition d'amplitude est effectuée directement au moyen d'une transformation de coordonnées du signal de mesure.

5. Procédé selon l'une quelconque des revendications précédentes, **caractérisé en ce que** l'activation et la désactivation périodiques du circuit d'excitation sont effectuées pendant des laps de temps spécifiés, fixes, de préférence de même durée, et/ou que l'activation et la désactivation du circuit d'excitation sont régulées au moyen des valeurs d'amplitude de l'oscillation amortie et/ou non amortie.

6. Procédé selon la revendication 5, **caractérisé en ce que** le laps de temps $\Delta t_1$ de l'amplification d'excitation présente un rapport fixe par rapport au laps de temps $\Delta t_2$ de la mesure de période,
dans lequel le rapport $\Delta t_1:\Delta t_2$ se situe de préférence dans la plage entre 1:1 et 1:3.

7. Procédé selon l'une quelconque des revendications 1 à 6, **caractérisé en ce**

- **que** le circuit d'excitation reste fermé jusqu'à ce que l'oscillation de résonance forcée de l'oscillateur atteigne son amplitude maximale, et/ou
- **qu'**à la fois les durées de période et l'amplitude de l'oscillation résonante forcée sont définies seulement après le découplage de l'excitateur.

8. Procédé selon l'une quelconque des revendications 1 à 7, **caractérisé en ce que** l'opération d'affaiblissement est interrompue après un laps de temps prédéfini ou lorsqu'une valeur d'amplitude spécifiée est atteinte et la qualité est calculée par extrapolation des valeurs d'amplitude obtenues et/ou la largeur de la fenêtre d'affaiblissement ou le laps de temps choisi pour l'affaiblissement sont maintenus ou choisis de manière constante.

9. Circuit de commande et/ou de régulation, en particulier servant à mettre en œuvre un procédé servant à mesurer la densité selon l'une quelconque des revendications 1 à 8, avec

- un circuit de commutation d'excitation, qui est activé en fonctionnement de manière associée à un résonateur de flexion présentant un tube oscillateur en forme de U, dans lequel est prévu dans le circuit d'activation d'excitation, qui excite l'oscillateur pour l'amener à osciller de manière non amortie, un interrupteur ou un commutateur (9, 19), qui interrompt l'excitation du résonateur de flexion (1) servant à l'oscillation non amortie de manière répétée ou pour des laps de temps ($\Delta t_2$) définis périodiquement, lors desquels laps de temps ($\Delta t_2$) l'oscillateur de flexions (1) oscille librement de manière amortie sans spécification d'une excitation, et l'interrupteur ou le commutateur (19), qui interrompt l'amplification d'excitation, est installé au niveau de la sortie du circuit amplificateur d'excitation, dans lequel
le circuit oscillant pour le circuit amplificateur et le résonateur de flexion (1) oscillent en phase dans le cas d'une interruption,
- une unité de mesure et d'évaluation, laquelle mesure la période de l'oscillation libre amortie pour déterminer la densité du fluide à examiner et en tient compte pour définir la densité du fluide, dans lequel
l'unité de mesure et d'évaluation comprend un filtre (10) supplémentaire, qui est réalisé pour diviser le signal de réponse en les fréquences respectives superposées.

10. Circuit de commande et de régulation pour un résonateur de flexion selon la revendication 9, **caractérisé en ce qu'**est prévu aux fins de la commutation dans l'oscillation forcée dans le circuit d'excitation, respectivement un circuit de régulation (8), qui réalise la commutation lorsqu'une valeur d'amplitude définie est atteinte pour l'oscillation libre amortie.

11. Circuit de commande et/ou de régulation pour un résonateur de flexion selon la revendication 9 ou 10, **caractérisé**

**en ce que** la commande spécifie pour la commutation ou l'unité de mesure et d'évaluation des laps de temps fixés $\Delta t_1$ et/ou $At_2$.

12. Circuit de commande et/ou de régulation selon l'une quelconque des revendications précédentes, **caractérisé en ce que** l'interrupteur (9, 19) est branché entre l'amplificateur d'excitation et le résonateur de flexion (1) ou son excitateur.

13. Circuit de commande et/ou de régulation selon l'une quelconque des revendications 9 à 12, **caractérisé en ce qu'**à la fois la durée de période et l'amplitude de l'oscillation résonante forcée sont définies seulement après le découplage de l'excitateur.

14. Résonateur de flexion avec un tube oscillateur en forme de U et avec un circuit de commande et/ou de régulation selon l'une quelconque des revendications 9 à 13.

15. Appareil de mesure avec un résonateur de flexion avec un tube oscillateur en forme de U et avec un circuit de commande et/ou de régulation selon l'une quelconque des revendications 9 à 14.

Fig. 1 Stand der Technik

Fig. 2

Fig. 3

EP 3 012 612 B1

Fig. 4

14

EP 3 012 612 B1

Fig. 5

15